# EUROPEAN PATENT APPLICATION

(11) **EP 0 889 328 A1**
(43) Date of publication of application: **07.01.1999**
(21) Application number: 97944189.6
(22) Date of filing: 21.10.1997
(51) Int. Cl.: G01N 35/02, G01N 33/543

(54) **AUTOMATIC IMMUNOLOGICAL ANALYZER**

(30) Priority: 24.10.1996 JP 299240/96
(71) Applicant: JAPAN TECTRON INSTRUMENTS CORPORATION, Tokyo 192 (JP); BIOMERIEUX, 69280 Marcy-L'Etoile (FR)
(72) Inventor: TOMINAGA, Kimimichi-Japan Tectron Instruments Corp, Tokyo 192 (JP); KAWAI, Yoshio,Japan Tectron Instruments Corp., Tokyo 192 (JP); TSUJI, Shinji-Japan Tectron Instruments Corp., Tokyo 192 (JP)
(74) Representative: Füchsle, Klaus, Dipl.-Ing.
(86) International application number: JP9703793
(87) International publication number: WO9818008

(57) **Abstract**

An automatic immunological analyzer, wherein reaction tube arrays are set between outer and inner circumferential edges of a reaction tube turret, and magnet-mounted pivotable magnet rings are provided therebetween. The effective B/F separation and agitation of a reagent of fine magnetic particles is carried out by making the positions of the reaction tubes and magnets stagger by one pitch in every one index time, and a photometric examination is then conducted by a chemiluminescence method. Since a method using a dedicated tip is employed for the dispensation of a sample and reagent, the tip is changed each time, so that mutual contamination does not occur. Dedicated pumps and nozzles are also used for an agitated liquid and an injected liquid.

## Description

### Technical field

The present invention relates to an automatic immunoassay device that is capable of effective and automatic immunoassay to assay specific substances in a specimen from an antigen-antibody reaction.

### Background art

Substances contained in blood and the like, such as globulin, enzymes and other proteins, hormones, bacteria, and viruses, have similar molecular structures and are present in very small quantities and are thus difficult to fix and quantify with ordinary analysis methods. Immuno-chemical analysis methods that use an antigen-antibody reaction are generally employed to analyses these substances.

Examples of these immuno-chemical analysis methods using labeling substances include RIA, EIA and FIA. Methods that use these labeling substances can also be separated into, for example, heterogeneous methods, which require so-called B/F separation, an operation to separate immune complexes (Bound), which are formed by causing an antigen-antibody reaction between an antibody (antigen) labeled with a labeling substance and an antigen (antibody) in a sample, from residual labeled-antigen (antibody) in a free state (Free) that does not contribute to the antigen-antibody reaction, and homogeneous methods that do not require this sort of B/F separation.

The EIA method (enzyme immunoassay method) has superior specificity and sensitivity, and is commonly used in the field of clinical tests. The EIA method normally uses labeling substances by linking to antigens or antibodies and a solid phase as mentioned above, and these are firstly brought into contact With the substance to be assayed in the specimen. Next, by reacting an antigen or antibody, which is labeled with an enzyme that is a labeling compound and reacts in a specific fashion with the object of assay, and fixed. Then, B/F separation, which completely removes the unreacted enzyme-labeled antibody, is performed by repeated washing. Thereafter, the activity of the enzyme of the labeling substance combined with the substance under test in the sample is assayed, whereby an amount of the substance to be assayed in the specimen is quantitatively assayed.

Accordingly, implementing EIA method has necessitated performing complex operations such as apportioning, dilution, agitation, B/F separation and transferring to the solid phase. Also, in the implementation thereof, a solid phase is generally employed. As the solid phase, polystyrene beads, magnetic particles, the inner wall of the reaction vessel, and the like are generally known. Among them, a method has been developed whereby, for performing the assay with high sensitivity and rapidly, the B/F separation is performed with a special-purpose vessel as the solid phase and a magnetic device in which are inserted magnets that match this vessel, and assay equipment has been developed for assaying large quantities of samples.

When this sort of technique is used to perform immunoassay, each of the individual stages such as the suction and apportioning of fixed quantities of sample, agitating with the reagent, B/F separation which has various reactions associated with it, and assay during washing have - in the main - hitherto been performed manually, and a large amount of skilled labor and time have been needed for the assay of large quantities of sample.

The present invention aims to automate this sort of immunoassay and provide an automatic immunoassay device that can assay large quantities of samples in a short time with a relatively compact device.

### Disclosure of the invention

The automatic immunoassay device relating to the present invention comprises:
a test tube turret that rotates intermittently at a predetermined rate, and a plurality of test tube holders which are disposed in two rows around the inside and around the outside in the vicinity of the upper surface of said test tubes,
a test tube feeding means which supplies a test tube to said test tube holder,
a specimen apportioning means which apportions specimens into said test tubes,
a rotating magnet ring wherein magnets are disposed in at least two places between the test tubes disposed in two rows,
a reagent apportioning means which apportions a labeling reagent into said test tubes,
a washing means that uses B/F separation,
an apportioning means which apportions an assay reagent into said test tubes,
a transferring means that extracts the test tubes containing a reaction liquid from the said test tube holder and moves them to a turret for assaying,
an assay means that assays an amount of a labeled substance in the reaction liquid after the reaction in said test tube, and
a test tube discarding means that discards the test tubes from said turret for assaying the test tubes after assay.

### Brief explanation of the drawings

Figure 1 is an explanatory top view of an automatic immunoassay device according to the present example.
Figure 2 is a piping configuration diagram of the B/F separation unit of the automatic immunoassay device.
Figure 3 is an explanatory mechanical diagram of the B/F separation unit of the automatic immunoassay device.
Figure 4 is an explanatory mechanical diagram of an luminescent apportioning unit.

### Best mode for practicing the invention

In the present invention, the automatic immunoassay device incorporates a rotating magnet ring in which a plurality of magnets are arranged in at least two places between the two rows of test tubes around the outside and around the inside/the magnet ring rotates together with the rotation of the test tubes, and it is made so that once per index time the positions of the test tubes and the magnets are shifted by one pitch at a time.

The rotation of the test tube holder is such that after the sample has been apportioned during one index time, it turns by a pitch of M (where M is a positive integer) for apportion of a reagent, and then rotates by -(M-1) so that it advances by a single pitch on balance. After B/F separation, a reagent that assays the amount of labeling substance is apportioned to the test tube. Then, the test tube is moved to an assay chamber, and the amount of labeling substance in the reaction liquid after reaction is quantified by, for example, a chemiluminescence method. After the contents of the assayed test tube have been sucked out, the test tube is directly discarded from the assay chamber. Here, the test tube holder rotates by a pitch of M after apportioning a sample therein, then rotates by a pitch of - (M-1), and a magnet ring rotates a pitch of N and rotates a pitch of -N (where N is a positive integer) accompanying with this, whereby the chemiluminescence immunoassay method is carried out continuously after B/F separation.

By continuing with the agitation operation alone without injecting a washing liquid and without removing the reaction liquid after B/F separation, it is possible to repeatedly move on to the next operation without implementing B/F separation, and to accommodate reagents that require a long reaction time. Specifically, by apportioning a primary reagent alone, it is possible to adopt the same reaction time as when a secondary reagent is apportioned.

By using a reagent pipette tip attachment/removal mechanism, cross-contamination of reagents is eliminated by the same mechanism as when exclusive pipettes are used for each reagent.

As disclosed in Unexamined Published Japanese Patent Application (JP-A) No. H8-15266, a unit is provided for agitating and dispersing this reagent, and before apportioning the reagent, the liquid is moved and mixed by repeatedly pressurizing and depressurizing the pipe inserted into the reagent vessel using gas pressure.

As the test tubes used in the present application, for example, twin-type cells with a central blocking wall as disclosed in Unexamined Published Japanese Patent Application (JP-A) No. H7-27695 can be used. A single angular-type transparent cell can also be used if necessary. Also, as disclosed in Unexamined Published Japanese Utility Model Application (JP-A-U) No. H5-93540, a test tube cuvette that allows passage to the left and right in the central part of the longitudinal direction of the two walls on the left and right is able to mix and agitate the reaction liquid with fluctuations in pressure difference by blowing in and sucking out air in the cuvette through air holes with a removable cap.

For the material of the cells, a light transmittance material such as hard glass, polypropylene, polystyrene, polyacrylonitrile, polymethylpentene-1, or the like is used.

With a large number of washing liquid pumps, a large number of reagent pumps and various pipes and injection nozzles for exclusive use, it is possible to select the optimum washing liquid and luminescent reagent for the items being assayed and reagents.

### Example

An example of the present invention is explained below based on the accompanying drawings.

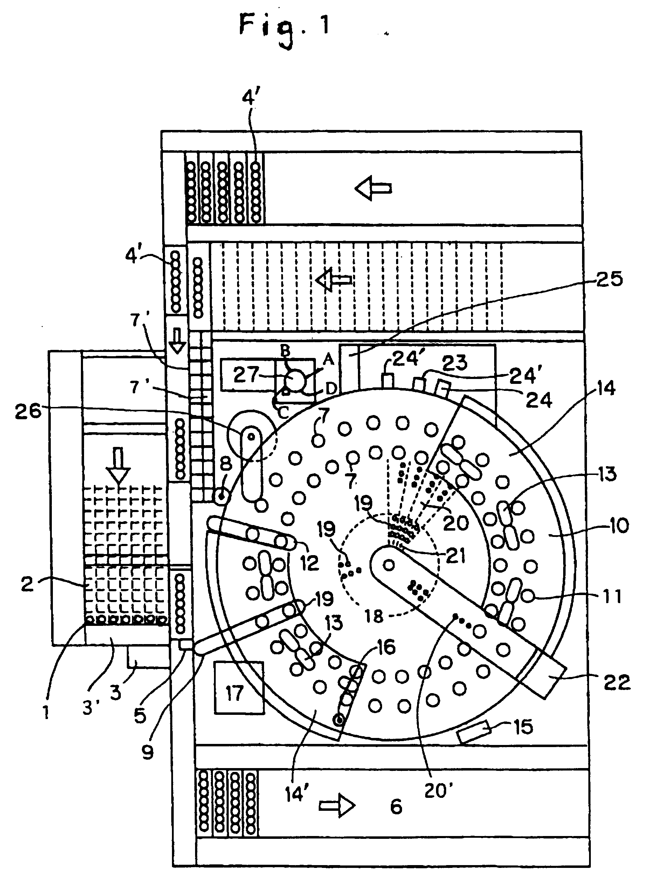

Figure 1 is a top view of an example of an automatic immunoassay device according to the present invention.

Sample rack 2, which holds a large number of sample tips 1 arranged over its length and breadth, is fed horizontally one pitch at a time by a chain conveyor and stops at a predetermined position according to the operation of a sample stopper gate 3.

Samples 4 are installed in sample cassettes 4', which are capable of holding several samples each, and a feed mechanism driven by a pulse motor is used for longitudinal free-flow feed, after which they are stopped at a predetermined sample apportioning position 5 by feeding them laterally one pitch at a time, after which the used sample cassettes 4', that have been sucked in and apportioned is fed to a return zone 6.

At the same time, test tubes 7 are fed longitudinally by the movement of racks where they are retained in two rows each, after which lateral feed is performed one pitch at a time, stopping at a cuvette distribution position 8.

With regard to the sample tips 1 for supplying samples that have stopped at a predetermined position, the drive mechanism of the sample apportioning means 9 of a three-axis (X, Y, Z) robot 3' - which comprises an arm that can move up and down, longitudinally and laterally, and a feed nozzle at the tip of the arm - is operated to pick up the sample tips 1 one at a time and move them to a predetermined position, pick up a sample 4 carried in sample cassette 4', into tip 1, and apportion the sample 4 into test tubes 7 in test tube holders 11, which are arranged in two rows around the inside and around the outside at the top surface of a test tube turret 10, with sample apportioning means 9. Sample tip 1 after apportioning the sample is discarded.

Meanwhile, test tube racks 7' also accommodate test tubes 7 in two rows, and the test tubes 7 that have been moved to a cuvette distribution position 8 supply test tube cuvettes 7 to predetermained test tube holders 11 around the inside and around the outside of test tube turret 10 two at a time by using a test tube supply means 12.

Test tube turret 10 is temperature controlled all the way round by a temperature controlled device (not illustrated) and is configured so as to rotate in a specified sequence. Test tube turret 10 is retained on magnet rotating ring 14 wherein magnets 13 are arranged at intermediate positions between test tubes 7. Test tube turret 10 and magnet rotating rings 14 and 14*'* are driven simultaneously or independently by the operation of a pulse motor, and are configured so that test tubes 7 and magnet position 13 shift by a pitch of -1 in each index time.

To shift the shifting of test tubes 7 and rotating ring row 14*'* by a pitch of 1, it is possible to implement a shift in pitch of -1 by the operation of a pulse motor and by operating an operating spring 16 installed at the bottom of test tube turret 10 which causes a shift of 1 pitch on stopper 15 and magnet ring 14.

The samples 4 carried in test tubes 7 are diluted with diluting water to predetermined concentrations by an automatic dilution system (not illustrated), and agitation and mixing are implemented. With regard to the agitation of the diluted liquid by an agitating/mixing unit 17, as disclosed in Unexamined Published Japanese Utility Model Application (JP-A-U) No. H5-93450, for example, the reaction liquid inside cuvette 7 is mixed and agitated by fluctuations in pressure difference by blowing in and sucking out air through a removable cap.

Reagent tray 18 has reagent vessel units 20 accommodated inside a refrigerator (not illustrated), reagent tips 19 and a reagent tip accommodating part 21, each of which can rotate independently. Reagent unit 20 holds reagent vessels 20' accommodating a first reagent and reagent vessels 20' accommodating a second reagent corresponding to the items being analyzed. Moreover, at least one reagent vessel including at least one reagent may be provided. The reagent tray 18 that holds them is made so as to position reagent vessels 20' in a predetermined place at a predetermined timing. The reagent vessels are made so that the reagents can be selected by a bar-code (not illustrated), and the selection is always performed according to the analysis.

A reagent pipette 22 can be moved and conveyed along two axes (X and Y). It picks up a reagent tip 19 held in reagent tip accommodating part 21, then chooses a predetermined reagent vessel 20, apportions into the diluted sample 4 in a predetermined test tube 7 according to the items being analyzed, and after tip 19 has been used it is returned to and accommodated in its original position in the tip rack.

The present apportioning process involves using an exclusive-use tip for each reagent by means of the attachment/removal mechanism of reagent pipette 22, and there is no cross-contamination between reagents. Washing is not performed in this reagent apportioning process.

B/F separation washing device 23 comprises 4 stages, the removal of the reaction liquid and the apportioning of washing liquid are repeated 3 times, and finally, after discarding the liquid, a luminescent reagent is injected. Specifically, the first-stage B/F separation washing device disposes of the antibody liquid inside test tube 7 by suction, after which washing liquid is injected and the reaction liquid is agitated with an agitating device 24. The second-stage B/F separation washing device 23 disposes of the washing liquid by sucking it into a pipette, and apportions the washing liquid again. After that, it is agitated by agitating device 24.

The third-stage B/F separation washing device sucks out the washing liquid with a pipette and apportions the washing liquid. Test tube 7 is sent to an agitation position and agitated. Furthermore, in the fourth-stage B/F separation washing, after the washing liquid has been sucked in and expelled, the luminescent reagent is injected and agitation is performed.

Alternatively, in the B/F separation, by just agitating without expelling the reaction liquid, and by adapting to reagents that require along reaction time, it is also possible to prolong the reaction time by apportioning only the primary reagent and not apportioning the secondary reagent.

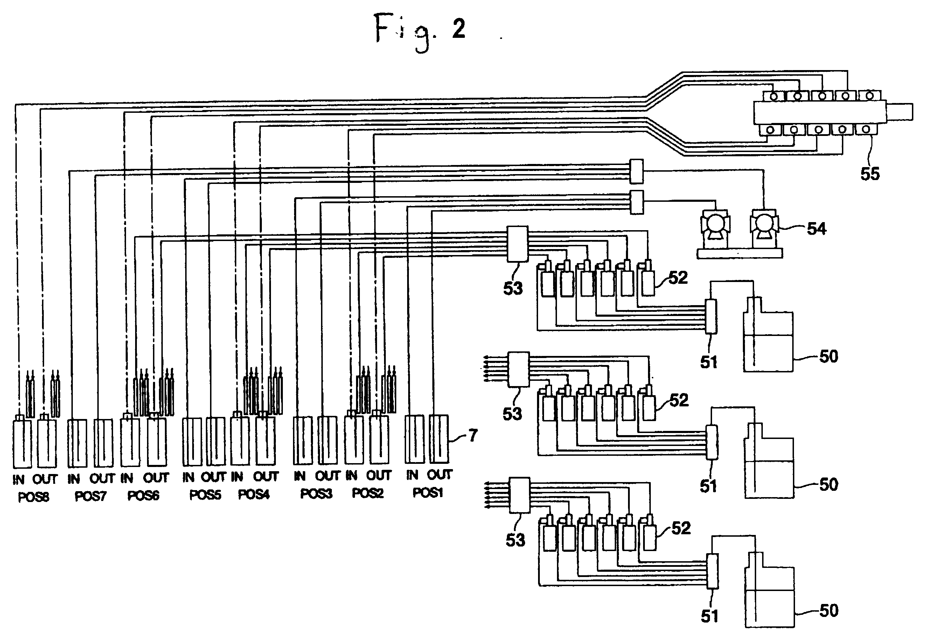

As Figure 2 shows, for example, the flow used in the present B/F separation process is piped from B/F washing liquid tanks 50 through branched joints, e.g., six-way joints 51 through B/F washing liquid pumps 52, and to each of the test tubes 7 through preheaters 53. The suction/expulsion pump 54 expels the washing liquid from test tubes 7.

The reaction liquid inside test tubes 7 is agitated by using an air pump 55 for agitation. The positions of test tubes 7 in the B/F separation process are set to POS1, POS2, ..., POSn in a counterclockwise direction. In the B/F separation process in the example, a small lightweight solenoid pump is used as washing liquid pump 52, and by using dedicated pipes and exclusive-use injection nozzles, it is possible to select a washing liquid that is suited to the items being assayed from the three types of washing liquid.

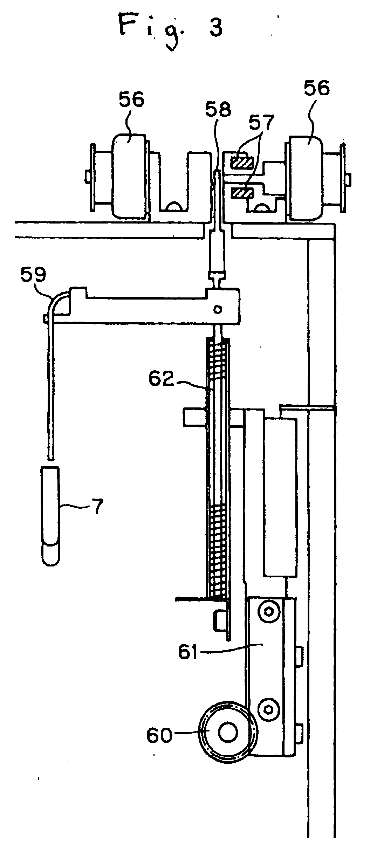

For example, a processing method for items being assayed for which a B/F separation process is not implemented is shown in Figure 3, whereby solenoid 56 is excited to move pin 57 out to the left and insert it into a hole in hanging plate 58, whereby hanging plate 58, and expulsion nozzle 59 are prevented from descending. If solenoid 56 is not excited, with regard to expulsion nozzle 59, expulsion nozzle 59 also descends as rack 61 descends with the rotation of pinion 60, but nozzle 59 that is unable to descend at pin 57 does not descend and spring 62 is simply compressed. For test tubes 7 for which suction and expulsion are not performed, the operation of washing liquid injection pump 52 is stopped.

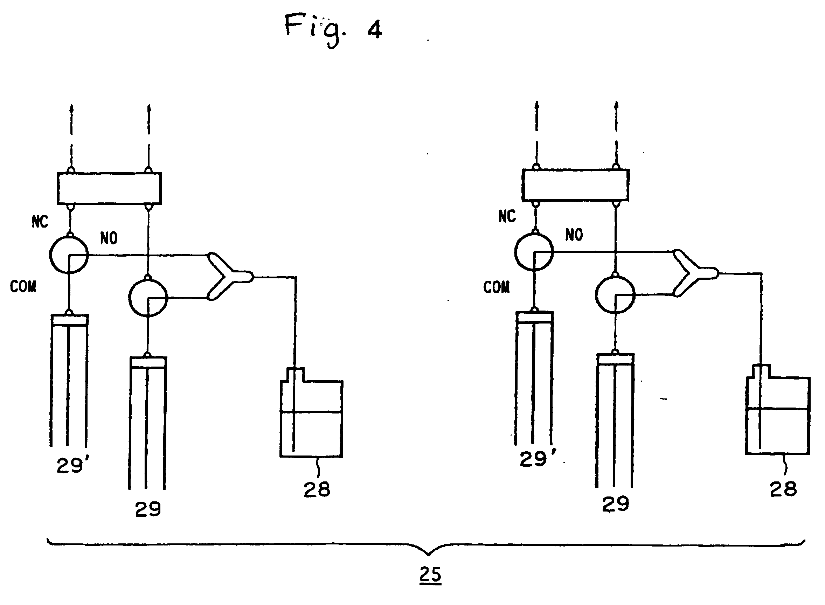

Furthermore, in the luminescent reagent apportioning unit 25 shown in Figure 4, the luminescent reagent is apportioned into each of the test tubes 7. The luminescent reagent is, for example, apportioned into test tubes 7 at each position according to a preheater, using a twin series of syringe pumps 29 and 29' from two reagent vessels 28. The apportioned luminescent reagent emits, and the amount of labeled enzyme in the reaction vessel - i.e., the dose of luminescence, which depends on the amount of a specific antigen - is assayed. The amount of luminescence is assayed by a photon counter system, and the number of pulses in one second is input to a control unit.

In this way, after B/F separation, the test tubes 7 in which the luminescent reagent is apportioned are picked up by a change device 26 at optical assay position A after a specific time has elapsed, moved to turret for assay. Then, it is rotated by 90° and subjected to photometry by a detector 27 at position B, whereby they are quantified. In the next index time, they are rotated by 90°, the liquid inside is sucked out and expelled at position C. They further turn by another 90° to position D where the test tubes 7 are discarded.

### Utilizability in industry

In an automatic immunoassay device relating to the present invention, as the test tubes disposed around the outside and around the inside on a test tube turret perform intermittent reciprocating rotation, a magnet ring which holds magnets set between the test tubes rotates with the same pitch as the test tubes on the way out, and rotates with pitch one greater than the test tubes on the way back. Thus, B/F separation of magnetic particle reagents is performed, and subsequent to the B/F separation, photometry is performed with a chemiluminescence method, and the used test tubes are discarded. The apportioning of samples and reagents uses tips, and after the sample, or a first reagent, a second reagent, etc. has been sucked in the chips and apportioned, the sample tips are discarded, and the reagent tips are put back in an exclusive-use tip tray, there is no cross-contamination.

As described above, the device of the present invention is a device which automates the operations performed manually hitherto, is made more compact, and can cope with the immuno reaction in which a reaction time is elongated. Also, in the device of the present invention, by arranging a magnet rotating ring between the test tubes arranged around the inside and outside in the device, it is able to perform scanning in a single index time and continuous photometry is also made possible, and thus the device is capable of highly efficient processing. There is also no cross-contamination because the samples, reagents and washing liquid systems all use exclusive-use piping systems and a tip system is employed.

## Claims

1. An automatic immunoassay device which comprises
a test tube turret that rotates intermittently at a predetermined rate, and a plurality of test tube holders which are disposed in two rows around the inside and around the outside in the vicinity of the upper surface of said test tubes,
a test tube feeding means which supplies a test tube to said test tube holder,
a specimen apportioning means which apportions specimens into said test tubes,
a rotating magnet ring wherein magnets are disposed in at least two places between the test tubes disposed in two rows,
a reagent apportioning means which apportions a labeling reagent into said test tubes,
a washing means that uses B/F separation,
an apportioning means which apportions an assay reagent into said test tubes,
a transferring means that extracts the test tubes containing a reaction liquid from the said test tube holder and moves them to a turret for assaying,
an assay means that assays an amount of a labeled substance in the reaction liquid after the reaction in said test tube, and
a test tube discarding means that discards the test tubes from said turret for assaying the test tubes after assay.

2. An automatic immunoassay device according to Claim 1, wherein the magnet ring rotates together with the rotation of the test tubes, and the positions of the test tubes and magnets are scanned over a single pitch once per index time.

3. An automatic immunoassay device according to Claim 1, wherein the rotation of the test tube holder is such that it turns by a pitch of M and then turns by a pitch of -(M-1) after apportion of the sample, and together with this the magnet ring turns by a pitch of N and turns by a pitch of -N,
wherein M and N are positive integers,
and a chemiluminescence immunoassay method is successively performed after B/F separation.

4. An automatic immunoassay device according to Claim 1, wherein the immuno reaction time is prolonged without removing the reaction liquid after B/F separation.

5. An automatic immunoassay device according to Claim 1, wherein apportioning is performed by an exclusive-use pipette tip for each reagent with the use of a reagent pipette tip attachment/removal mechanism.

6. An automatic immunoassay device according to Claim 1, wherein separate washing liquid pumps are used for each type of washing liquid and in each stage, and from individual luminescent reagent pumps to exclusive pipes and exclusive injection nozzles are used for each type of luminescent reagents.
